Europäisches Patentamt

(19) European Patent Office

Office européen des brevets

(11) Numéro de publication: **0 258 094 B1**

(12) **FASCICULE DE BREVET EUROPEEN**

(45) Date de publication du fascicule du brevet:
03.10.90

(21) Numéro de dépôt: **87401732.0**

(22) Date de dépôt: **24.07.87**

(51) Int. Cl.⁵: **F16C 33/78, F16C 33/58**

(54) Ensemble de support en rotation et d'étanchéité d'un premier élément tournant dans un second élément.

(30) Priorité: **27.08.86 ES 1383**

(43) Date de publication de la demande:
**02.03.88 Bulletin 88/9**

(45) Mention de la délivrance du brevet:
**03.10.90 Bulletin 90/40**

(84) Etats contractants désignés:
**DE FR GB IT**

(56) Documents cités:
**DE-A- 1 952 450**
**FR-A- 1 436 490**
**FR-A- 1 589 720**
**FR-A- 2 023 980**
**FR-A- 2 254 241**
**FR-A- 2 369 942**
**FR-A- 2 527 283**
**US-A- 3 838 901**

(73) Titulaire: **BENDIX ESPANA S.A.,**
**Balmès 243 Apartado 9556, E-08080 Barcelona 6(ES)**

(72) Inventeur: **Mansilla Anguera, Narciso, Calle**
**Galileo 337 6 4a, E-08028 Barcelona(ES)**

(74) Mandataire: **Timoney, Ian Charles Craig et al, BENDIX**
**FRANCE Division Technique Service Brevets Bendix**
**Europe 126, rue de Stalingrad, F-93700 Drancy(FR)**

ACTORUM AG

## Description

La présente invention concerne un ensemble de support en rotation et d'étanchéité d'un premier élément tournant dans un second élément, plus particulièrement, mais non exclusivement, d'un élément rotatif de valve de distribution de servo-mécanisme, notamment de direction assistée de véhicule, tournant dans un boîtier de distributeur hydraulique, l'ensemble étant du type comprenant : une structure de chemin de roulement externe montée dans une ouverture étagée du second élément traversée par le premier élément et portant un joint à lèvres, la structure de chemin de roulement interne étant formée sur le premier élément.

Un ensemble de ce type est décrit dans le document GB-A-2 122 152. Dans ce document, le joint à lèvres (coopérant avec un second élément tournant distinct du premier élément tournant formant le chemin de roulement interne) est monté dans la structure de chemin de roulement externe qui est constituée sous la forme d'une pièce tubulaire massive qui doit être usinée avec précision.

La présente invention a pour objet de proposer un ensemble du type sus-mentionné, de conception robuste et légère et de faible coûts de fabrication et de montage, convenant à une fabrication en très grande série.

Pour ce faire, selon une caractéristique de l'invention, la structure de chemin de roulement externe est constituée par une armature en tôle conformée de façon à présenter une zone intermédiaire à profil arrondi formant le chemin de roulement proprement dit, se prolongeant, d'un côté, à repliement, par une première zone d'extrémité s'étendant radialement, et de l'autre côté par une seconde zone d'extrémité s'étendant axialement et portant le joint à lèvres.

La présente invention a pour autre objet de proposer un ensemble du type considéré permettant d'assurer, sans surcoûts de fabrication, outre l'étanchéité dynamique par le joint à lèvres, une étanchéité statique de part et d'autre, axialement, de l'ensemble.

Pour ce faire, selon une autre caractéristique de l'invention, la seconde zone d'extrémité porte en outre un joint statique coopérant en contact d'engagement avec une première portion adjacente de l'alésage, ledit joint statique et le joint à lèvres étant avantageusement surmoulés sur la seconde zone d'extrémité.

D'autres caractéristiques et avantages de la présente invention ressortiront de la description suivante d'un mode de réalisation, donné à titre illustratif mais nullement limitatif, faite en relation avec des dessins annexés, sur lesquels :

- la figure 1 est une vue partiellement en coupe longitudinale d'un distributeur hydraulique rotatif pour servo-direction comportant un ensemble de support en rotation et d'étanchéité selon l'invention ; et
- la figure 2 est une vue de détail à plus grande échelle de l'ensemble de la figure 1.

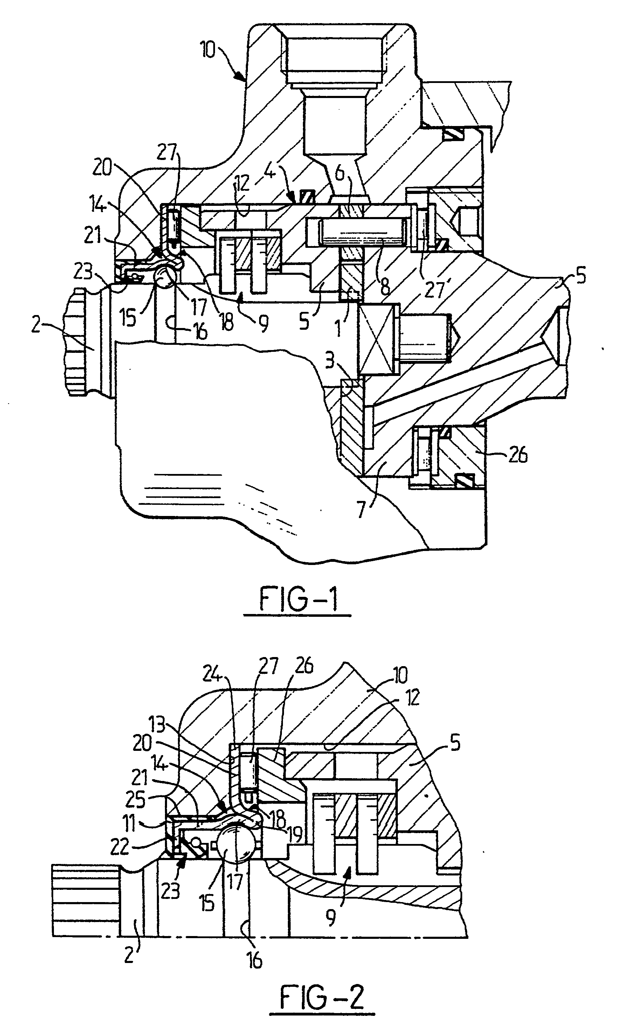

Sur la figure 1 on a représenté schématiquement un distributeur hydraulique pour servo-direction de véhicules du type décrit dans le document EP-A-0 181 797, au nom de la demanderesse, comprenant essentiellement un rotor de valve en étoile 1 couplé en rotation à un arbre d'entrée 2 et monté à rotation dans une chambre discoïde 3 d'un stator de valve, désigné généralement par la référence 4, couplé en rotation à un arbre de sortie coaxial 5. Dans le mode de réalisation représenté, le stator 4 est constitué d'un assemblage axial d'un premier élément de stator 5, d'entretoises 6 d'épaisseur correspondant à l'extension axiale de la chambre discoïde 3, et d'un second élément de stator 7 constitué avantageusement d'une seule pièce avec l'arbre de sortie 5, ces différents composants étant couplés en rotation par des pions axiaux tels que 8.

L'ensemble arbre de sortie 5/stator de valve 4 est couplé à l'arbre d'entrée 2 par un accouplement élastique à course morte comportant une série de ressorts en C 9 tels que décrits dans le document EP-A-0 077 710 au nom de la demanderesse. Le distributeur hydraulique est monté dans un boîtier 10 formé intérieurement avec une ouverture étagée traversante constituée par une portion d'alésage d'entrée 11, de diamètre réduit, au travers duquel s'étend l'arbre d'entrée 2, et une portion d'alésage intérieur 12, de diamètre agrandi, se raccordant à la portion d'alésage d'entrée 11 par un épaulement radial 13, le stator de valve 4 étant monté tourillonnant dans la portion d'alésage intérieur 12.

Comme on le voit mieux sur la figure 2, conformément à l'invention, un ensemble de support en rotation et d'étanchéité 14 est prévu entre le boîtier 10 et l'arbre d'entrée 2. Les billes de roulement 15 sont positionnées entre un chemin de roulement interne 16, formé dans l'arbre d'entrée 2, et un chemin de roulement externe constitué par une zone intermédiaire à profil arrondi 17 d'une armature en tôle 18, la zone intermédiaire 17 se prolongeant, d'un côté par un pli en épingle à cheveux 19 épousant le profil du demi contour de la zone intermédiaire 17 et se prolongeant lui-même à son tour par une première zone d'extrémité s'étendant radialement 20. De l'autre côté, la zone intermédiaire 17 se prolonge par une seconde zone d'extrémité 21 s'étendant axialement terminée par une partie d'extrémité 22 s'étendant radialement vers l'intérieur sur laquelle est surmoulée une structure de joint à lèvres 23. Comme on le voit sur la figure 2, l'ensemble 14 est mis en place dans le boîtier 10 avec la seconde zone d'extrémité 21 s'étendant dans la portion d'alésage d'entrée 11 et avec la première zone d'extrémité 20 plaquée contre l'épaulement 13, l'extension radiale de cette première zone d'extrémité 20 étant déterminée de façon que sa périphérie 24 vienne porter radialement, en configuration montée, contre la paroi de la portion d'alésage intérieur 12. L'armature 18 est conformée de façon que, en position de montage, la première zone d'extrémité 20 s'étende radialement sensiblement dans le plan des centres des billes 15 du roulement de façon que les forces de réaction radiales du roulement soient reprises dans ce plan par appui de la périphérie 24 de la zone 20 contre la paroi intérieure de la portion d'alésage 12.

Dans le mode de réalisation préféré représenté, la seconde zone d'extrémité 21 s'étend axialement à distance, radialement vers l'intérieur, de la paroi de la portion d'alésage d'entrée 11, un joint statique tubulaire 25, avantageusement surmoulé d'une seule pièce avec le joint à lèvres 23, étant interposé à compression entre la seconde zone d'extrémité 21 et la paroi de la portion d'alésage d'entrée 11 de façon à isoler ainsi tant dynamiquement que statiquement la portion d'alésage intérieur 12 de l'extérieur du boîtier 10.

La première zone d'extrémité 20 s'étendant radialement peut être bloquée en position contre l'épaulement 13 par tout moyen adéquat. Toutefois, de préférence, dans le mode de réalisation représenté, où l'ensemble de stator 4 est maintenu en position assemblée dans le boîtier 10 par une bague d'assemblage 26 coaxiale à l'arbre de sortie 5, avec interposition de butées axiales à aiguilles 27, 27', la première zone d'extrémité 20 s'étendant radialement est exploitée pour constituer un chemin de roulement de la butée axiale 27 laquelle assure ainsi, via la contrainte axiale exercée par la bague de montage 26, à travers l'ensemble de stator 4 et un chemin de roulement annulaire 26 lié à l'élément 5 adjacent du stator 4, le positionnement et le maintien en place de l'ensemble 14 dans le boîtier 10.

L'armature 18 de l'ensemble 14 est réalisée à partir d'un flan annulaire en acier ductile qui est tout d'abord mis en forme par estampage profond pour constituer l'extrémité 22 et la zone s'étendant axialement 21 qui se raccorde alors directement, à angle droit, à la zone s'étendant radialement 20, après quoi le pli 19, puis la zone intermédiaire à profil arrondi 17 sont réalisés par moletage.

Quoique la présente invention ait été décrite en relation avec un mode de réalisation particulier, elle ne s'en trouve pas limitée mais est au contraire susceptible de modifications et de variantes qui apparaîtront à l'homme de l'art, notamment en ce qui concerne les formes de détail et les dimensionnements respectifs des zones d'extrémité 20 et 21.

**Revendications**

1. Ensemble de support en rotation et d'étanchéité d'un premier élément (2) tournant dans un second élément (10), comprenant une structure de chemin de roulement externe (18) montée dans une ouverture étagée (11,12) du second élément traversée par le premier élément (2) et portant un joint à lèvres (23), le chemin de roulement interne (16) étant formé sur le premier élément (2), caractérisé en ce que la structure de chemin de roulement externe est constituée par une armature en tôle (18) conformée de façon à présenter une zone intermédiaire à profil arrondi (17) formant le chemin de roulement externe se prolongeant, d'un côté, à repliement (19), par une première zone d'extrémité (20) s'étendant radialement, et de l'autre côté, par une seconde zone d'extrémité (21) s'étendant axialement et portant le joint à lèvres (23).

2. Ensemble selon la revendication 1, caractérisé en ce que l'ouverture étagée du second élément (10) comporte une première portion d'alésage (11), de diamètre réduit, se raccordant à une seconde portion d'alésage (12), de diamètre agrandi, par un épaulement radial (13), la première zone d'extrémité (20) s'étendant le long de l'épaulement radial (13), la seconde zone d'extrémité (21) s'étendant axialement dans la première portion d'alésage (11).

3. Ensemble selon la revendication 2, caractérisé en ce que la seconde zone d'extrémité (21) porte également un joint statique (25) coopérant en contact d'engagement avec la première portion d'alésage (11).

4. Ensemble selon l'une des revendications précédentes, caractérisé en ce que le joint à lèvres (23) est surmoulé sur une extrémité rabattue radialement (22) de la seconde zone d'extrémité (21).

5. Ensemble selon la revendication 3 et la revendication 4, caractérisé en ce que le joint à lèvres (23) comporte une partie périphérique allongée (25) formant ledit joint statique.

6. Ensemble selon l'une des revendications précédentes caractérisé en ce que la première zone d'extrémité (20) s'étend radialement dans le plan des centres des billes (15) du roulement.

7. Ensemble selon la revendication 6, caractérisé en ce que la première zone d'extrémité (20) porte radialement en butée, par sa périphérie (24), contre la seconde portion d'alésage (12) du boîtier (10).

8. Ensemble selon l'une des revendications 2 à 7, caractérisé en ce qu'il est prévu des moyens (27), dans le boîtier (10), bloquant en position la première zone d'extrémité (20) contre l'épaulement radial (13) du boîtier (10).

9. Ensemble selon la revendication 8, caractérisé en ce que les moyens de blocage sont constitués par une butée à roulement axiale (27) coopérant avec un troisième élément (5) monté à rotation dans le boîtier (10) et actionné en rotation par le premier élément (2).

**Patentansprüche**

1. Drehlagerungs- und Abdichtungsvorrichtung eines sich in einem zweiten Element (10) drehenden ersten Elementes (2), ein äußeres Laufbahnkreisgefüge (18) umfassend, das in eine abgestufte Öffnung (11, 12) des vom ersten Element (2) durchquerten zweiten Elementes montiert ist und eine Lippendichtung (23) trägt, wobei der innere Laufbahnkreis (16) auf dem ersten Element (2) gebildet ist, dadurch gekennzeichnet, daß das äußere Laufbahnkreisgefüge aus einem Blechmantel (18) besteht, der so gestaltet ist, daß er einen Zwischenbereich mit Rundprofil (17) aufweist, der den äußeren Laufbahnkreis bildet, der sich an einer Seite mit einem Knick (19) durch einen ersten sich radial erstreckenden Endbereich (20) und an der anderen Seite durch einen zweiten sich axial erstreckenden und die Lippendichtung (23) tragenden Endbereich (21) verlängert.

2. Vorrichtung nach Anspruch 1, dadurch gekennzeichnet, daß die abgestufte Öffnung des zweiten Elementes (10) eine erste Bohrungspartie (11) reduzierten Durchmessers enthält, die sich an eine zweite Bohrungspartie (12) vergrößerten Durchmessers durch einen Radialansatz (13) anschließt, wobei sich der erste Endbereich (20) entlang des Radialansatzes (13) und der zweite Endbereich (21) axial in der ersten Bohrungspartie (11) erstreckt.

3. Vorrichtung nach Anspruch 2, dadurch gekennzeichnet, daß der zweite Endbereich (21) auch eine statische Dichtung (25) trägt, die mit der ersten Bohrungspartie (11) eingreifend zusammenwirkt.

4. Vorrichtung nach einem der vorhergehenden Ansprüche, dadurch gekennzeichnet, daß die Lippendichtung (23) auf ein radial umgebogenes Ende (22) des zweiten Endbereichs (21) aufgeformt ist.

5. Vorrichtung nach Anspruch 3 und Anspruch 4, dadurch gekennzeichnet, daß die Lippendichtung (23) eine langgestreckte, diese statische Dichtung bildende Umfangspartie (25) umfaßt.

6. Vorrichtung nach einem der vorhergehenden Ansprüche, dadurch gekennzeichnet, daß sich der erste Endbereich (20) radial in der Ebene der Zentren der Kugeln (15) des Kugellagers erstreckt.

7. Vorrichtung nach Anspruch 6, dadurch gekennzeichnet, daß der erste Endbereich (20) mit seinem Umfang (24) radial gegen die zweite Bohrungspartie (12) des Gehäuses (10) anstößt.

8. Vorrichtung nach einem der Ansprüche 2 bis 7, dadurch gekennzeichnet, daß im Gehäuse (10) Mittel (27) vorgesehen sind, die den ersten Endbereich (20) gegen den Radialansatz (13) des Gehäuses (10) feststellen.

9. Vorrichtung nach Anspruch 8, dadurch gekennzeichnet, daß die Feststellmittel aus einem Axialrollenlager (27) bestehen, das mit einem dritten Element (5) zusammenwirkt, das im Gehäuse (10) drehend montiert und vom ersten Element (2) drehend betätigt wird.

**Claims**

1. Rotating and sealed bearing assembly of a first member (2) rotating in a second member (10), comprising a bearing outer track structure (18) mounted in a stepped orifice (11, 12) of the second member traversed by the first member (2) and bearing a lip seal (23), the hearing inner track (16) being formed on the first member (2), characterized in that the bearing outer track structure is made of a sheet steel backing plate (18) shaped in order to present an intermediate zone of rounded profile (17) forming the bearing outer track, extending, on one side, folded back (19), by a first end zone (20) extending radially, and on the other side, by a second end zone (21) extending axially and bearing the lip seal (23).

2. Assembly according to Claim 1, characterized in that the stepped orifice of tie second member (10) comprises a first bore part (11), of small diameter, connected to a second bore part (12), of large diameter, by a radial shoulder (13), the first end zone (20) extending the length of the radial shoulder (13), the second end zone (21) extending axially in the first bore part (11).

3. Assembly according to Claim 2, characterized in that the second end zone (21) bears a static seal (25) interacting in engagement contact with the first bore part (11).

4. Assembly according to any of the preceding claims, characterized in that the lip seal (23) is moulded on an end turned back radially (22) of the second end zone (21).

5. Assembly according to Claim 3 and Claim 4, characterized in that the lip seal (23) comprises an elongated peripheral part (25) forming the said static seal.

6. Assembly according to any of the preceding claims, characterized in that the first end zone (203 extends radially along the centre line of the ball bearings (15).

7. Assembly according to Claim 6, characterized in that the first end zone (20) butts radially up against the second bore part (12 of the housing (10) by its periphery (24).

8. Assembly according to any of Claim 2 to 7, characterized in that means (27) are provided, in the housing (10), to lock the first end zone (20) in position up against the radial shoulder (13) of the housing (10).

9. Assembly according to Claim 8, characterized in that the means of locking are constituted by an axial thrust bearing (27) interacting with a third member (5) fitted to rotate in the housing (10) and actioned in rotation by the first member (2).

FIG-1

FIG-2